# EUROPÄISCHE PATENTSCHRIFT

(11) **EP 1 611 325 B1**
(45) Veröffentlichungstag und Bekanntmachung des Hinweises auf die Patenterteilung: **02.03.2011**
(21) Anmeldenummer: 04723905.8
(22) Anmeldetag: 27.03.2004
(51) Int. Cl.: F01P 7/04

(54) **ANTRIEBSANLAGE UND VERFAHREN ZUR OPTIMIERUNG DER ENERGIEBEREITSTELLUNG FÜR EIN KÜHLSYSTEM EINER ANTRIEBSANLAGE**
PROPULSION SYSTEM AND METHOD FOR OPTIMISING POWER SUPPLY TO THE COOLING SYSTEM THEREOF
SYSTEME D'ENTRAINEMENT ET PROCEDE D'OPTIMISATION DE LA FOURNITURE D'ENERGIE AU SYSTEME DE REFROIDISSEMENT D'UN SYSTEME D'ENTRAINEMENT

(30) Priorität: 04.04.2003 DE 10315402
(43) Veröffentlichungstag der Anmeldung: 04.01.2006
(73) Patentinhaber: Voith Turbo GmbH & Co. KG, 89522 Heidenheim (DE)
(72) Erfinder: LAUKEMANN, Dieter, 74541 Vellberg (DE)
(74) Vertreter: Dr. Weitzel & Partner
(86) Internationale Anmeldenummer: PCT/EP2004/003273
(87) Internationale Veröffentlichungsnummer: WO 2004/088104

(56) Entgegenhaltungen:
- EP-A- 1 284 344
- FR-A- 1 052 737
- GB-A- 824 783
- US-A- 2 837 069
- US-A- 5 215 044
- US-A- 5 947 247
- US-A1- 2002 016 656

## Beschreibung

Die Erfindung betrifft eine Antriebsanlage, im Einzelnen mit den Merkmalen aus dem Oberbegriff des Anspruches 1; ferner ein Verfahren zur Optimierung der Energieversorgung für ein Kühlsystem zur Kühlung wenigstens eines Aggregates einer Antriebsanlage.

Antriebsanlagen für stationäre oder mobile Anwendungen, insbesondere für den Einsatz in Fahrzeugen umfassen mindestens eine Antriebsmaschine, welche für mobile Anwendungsfälle in der Regel als Verbrennungsmotor ausgeführt sind. Diese benötigen zur Abfuhr der beim Verbrennungsprozess entstehenden Wärme ein Kühlsystem. Das Kühlsystem umfasst in der Regel einen Kühlmittelkreislauf zum Führen eines Kühlmediums, eine Kühleinrichtung, die in der Regel als Wärmetauscher ausgeführt ist sowie eine Fördereinrichtung zum Umwälzen des Kühlmittels im Kühlmittelkreislauf, in der Regel eine Kühlmittelumwälzpumpe. Ferner ist der Kühleinrichtung zur Realisierung eines optimalen Wärmeübergangs an die Umgebung und den Transport der Umgebungsluft eine Einrichtung in Form eines Lüfters bzw. Ventilators zugeordnet. Bei bekannten Ausführungen wird dieser Lüfter durch die Antriebsmaschine, insbesondere den Verbrennungsmotor angetrieben. Die dadurch der Kühleinrichtung zuführbare Luftmenge ist dabei proportional der Motordrehzahl. Ein wesentlicher Nachteil dieses Systems besteht dabei in der langsamen Reaktionszeit und der unzureichenden Anpassung der bereitstellbaren Kühlleistung an den tatsächlichen Bedarf. Wird eine zu große Luftmenge bereitgestellt, d. h. bei hoher Drehzahl der Antriebsmaschine, wird dadurch unnötig viel Energie für den Lüfterantrieb aufgewandt, welche zur Bereitstellung der erforderlichen Kühlleistung gar nicht erforderlich wäre. Ist die Luftmenge zu gering, regelt der Motor seine Leistung zurück. Es sind ferner Lösungen bekannt, bei denen der Lüfter abschaltbar ist oder verschiedene Übersetzungsstufen zum Lüfterantrieb geschalten werden können. Auch diese Systeme zeichnen sich durch eine langsame Reaktionszeit und unzureichende Anpassung der über das Kühlsystem bereitstellbaren Kühlleistung an den tatsächlichen Bedarf, der durch die Antriebsaggregate, zumindest der Antriebsmaschine bedingt wird, aus.

Andere Systeme sind durch die Verwendung von Mitteln zur Beeinflussung der Lüfterleistung zwischen Antriebsmaschine und Lüfter charakterisiert. Denkbar sind mechanische Kupplungssysteme, die in Abhängigkeit der Temperatur des Kühlmediums schließen, wobei eine direkte Proportionalität zwischen der Kopplung beziehungsweise Anpressdruck und der Temperatur im Kühlsystem besteht, welcher als wesentlicher Nachteil eines derartigen Systems anzusehen ist. So muss bereits die Betätigungseinrichtung, insbesondere die Stellgröße im Hinblick auf die sich im Kühlkreislauf einstellende Temperatur genau ausgelegt werden. Ferner reagiert dieses System auf vorliegende Temperaturwerte, so dass vom Kühlsystem zum einen nicht immer die volle theoretisch mögliche Kühlkapazität bereitstellbar ist und zum anderen die Einstellung dieser aufgrund der Trägheit des Systems zeitlich verzögert erfolgt.

Aus der Druckschrift US 2,837,069 ist eine gattungsgemäße Antriebsanlage vorbekannt, umfassend eine Brennkraftmaschine und eine steuerbare hydrodynamische Kupplung. Der Lüfter kühlt das Kühlmittel der Brennkraftmaschine und wird über die Kupplung von der Brennkraftmaschine angetrieben. Das Übertragungsverhältnis der Kupplung wird dabei von einem Thermostatventil bestimmt, indem dieses den Kühlwassereingang zur Kupplungskammer, abhängig von der Temperatur, öffnet bzw. schließt. Ein wesentlicher Nachteil des in dieser Druckschrift beschriebenen Systems besteht ebenfalls in der langsamen Reaktionszeit und der damit unzureichenden Anpassung der bereitstellbaren Kühlleistung einen tatsächlichen Bedarf, das das Thermostatventil aufgrund seiner Ausführung ebenfalls zum einen nicht so feinfühlig eingeregelt werden kann und ferner auch erst die Trägheit des Systems überwinden muss.

Ein Verfahren zur Optimierung der Energieversorgung eines Kühlsystems zur Kühlung mindestens eines Aggregates einer Antriebsanlage ist aus EP 128 4344 vorbekannt.

FR 1 052 737 A kann als nächstliegender Stand der Technik angesehen werden. Die aus diesem Dokument bekannten Merkmale sind im Oberbegriff von Anspruch 1 zusammengefasst.

Der Erfindung lag daher die Aufgabe zugrunde, ein hinsichtlich des erforderlichen Energiebedarfes optimiertes Kühlsystem zu schaffen, wobei die Ausbildung des Kühlsystems und der dazu erforderlichen Maßnahme durch einen geringen konstruktiven und steuerungstechnischen Aufwand charakterisiert sein soll. Dabei ist darauf zu achten, dass die Trägheit des Systems gemäß den aus dem Stand der Technik bekannten Lösungen weitestgehend ausgeschaltet wird und eine schnelle Reaktion auf eine sich aktuell einstellende Kühlleistungsbedarfsänderung erfolgen kann.

Die erfindungsgemäße Lösung ist durch die Merkmale des Anspruches 1 charakterisiert. Vorteilhafte Ausgestaltungen sind in den Unteransprüchen wiedergegeben.

Die Antriebsanlage mit einer Antriebsmaschine, insbesondere in Form einer Verbrennungskraftmaschine umfasst ein Kühlsystem zum Kühlen mindestens der Antriebsmaschine, umfassend einen Kühlmittelkreislauf zum Leiten eines Kühlmediums, und eine Einrichtung zur Bereitstellung kühler Umgebungsluft zur Wärmeaufnahme aus dem Kühlmittelkreislauf in Form eines Lüfters beziehungsweise Ventilators, der mit der Antriebsmaschine in Triebverbindung steht und dem Kühlmittelkreislauf zugeordnete Kühleinrichtung. Das Kühlsystem umfasst ferner eine Kühlmittelumwälzpumpe zur Aufrechterhaltung eines Strömungskreislaufes im Kühlmittelkreislauf. Erfindungsgemäß ist zwischen der Antriebsmaschine und dem Lüfter eine steuer- oder regelbare Kupplung in Form einer hydrodynamischen Kupplung vorgesehen. Diese ist bei Antrieb einer Kühlmittelumwälzpumpe durch die Antriebsmaschine dieser nachgeschaltet. Die hydrodynamische Kupplung umfasst ein Primärschaufelrad und ein Sekundärschaufelrad, die miteinander einen mit Betriebsmittel befüllbaren Arbeitsraum bilden, wobei die Kupplung frei von einem Leitrad ist. Das Primärrad ist dabei wenigstens mittelbar, d.h. direkt oder über weitere Übertragungselemente mit der Antriebsmaschine verbunden, während das Sekundärrad wenigstens mittelbar, d.h. vorzugsweise direkt oder aber über weitere Übertragungselemente mit dem Lüfter, insbesondere der Lüfterantriebswelle verbunden ist. Die Steuerung des Übertragungsverhaltens über die hydrodynamische Kupplung erfolgt dabei
- als Steuer- und / oder Regelung der mittels der hydrodynamischen Kupplung aufnehmbaren Leistung;
- Steuer- und / oder Regelung des mit der hydrodynamischen Kupplung übertragbaren Momentes;
- Steuer- und / oder Regelung der Drehzahl des Sekundärrades.

Als Stellgröße für alle diese Steuer- und / oder Regelaufgaben dient dabei der Füllungsgrad der hydrodynamischen Kopplung beziehungsweise eine, diesen wenigstens mittelbar charakterisierende oder beeinflussende Größe.

Die erfindungsgemäße Ausgestaltung der Antriebsanlage bietet den Vorteil einer autark zur Antriebsmaschine realisierbaren Einstellbarlzeit der Lüfterleistung durch Änderung beziehungsweise Beeinflussung des über die Kopplung übertragbaren Momentes. Die Rückwirkung auf die Antriebsmaschine erfolgt in Abhängigkeit der von der Antriebsmaschine bereitgestellten und über die Kupplung zu übertragenden Leistung, wobei aufgrund der Eirtstellbarl<eit des übertragbaren Momentes die Drehzahl an der Abtriebsseite, das heißt der Lüfterantriebswelle variierbar ist und ferner entsprechend dieser Drehzahl unter Berücksichtigung des betriebsbedingten Schlupfes der Kupplung die Drehzahl der Antriebsmaschine angepasst wird.

Bezüglich der konstruktiven Ausführung der Antriebsanlage bestehen eine Mehrzahl von Möglichkeiten. Bei Ausgestaltung als hydrodynamische Kupplung kann diese
a) mit einem eigenen Betriebsmittelversorgungssystem versehen werden oder aber
b) das Kühlsystem der Antriebsmaschine als Betriebsmittelversorgungssystem nutzen.

Zur Realisierung einer möglichst kompakten Anordnung mit weitestgehendster Ausnutzung vorhandener Komponenten wird vorzugsweise die Möglichkeit gemäß b) gewählt. Die hydrodynamische Kupplung befindet sich dabei in der Anordnung in Triebverbindung mit der Kurbelwelle der Antriebsmaschine und dem Lüfter, d.h. zwischen Motor und Lüfter. Die Anordnung im Kühlsystem erfolgt in Strömungsrichtung des Kühlmittels betrachtet der Umwälzpumpe nachgeschaltet, wobei der Zufluss beziehungsweise Durchfluss durch die hydrodynamische Kupplung über eine Ventileinrichtung gesteuert beziehungsweise geregelt wird.

Die Ventileinrichtung kann vielgestaltig ausgeführt sein. Bei dieser handelt es sich um eine verstellbare Ventileinrichtung, wobei die Verstellbarkeit in Stufen oder vorzugsweise stufenlos erfolgt. Gemäß einer besonders vorteilhaften Ausgestaltung wird zur feinfühligen Einstellung des erforderlichen Füllungsgrades mindestens ein Proportionalventil verwendet.

Bei Ausführungen mit separatem Betriebsmittelversorgungssystem kann der hydrodynemischen Kupplung entweder ein offener oder geschlossener Kreislauf zugeordnet werden. Die Steuerung beziehungsweise Regelung des Füllungsgrades erfolgt erfindungsgemäß Ober eine Drucksteuerung, bei einem geschlossenen Kreislauf durch das Aufbringen eines statischen Überlagerungsdruckes in den Kreislauf. Bei offenen Kreisläufen erfolgt die Einstellung des Füllungsgrades beispielsweise über eine entsprechend steuerbare beziehungsweise verstellbare Füllpumpe.

Erfindungsgemäß wird ein Verfahren zur Optimierung der Kühlleistungsbereitstellung für ein Kühlsystem zur Kühlung mindestens eines Antriebsaggregates einer Antriebsanlage mit mindestens einer Antrlebsmaschine und einem, diesem zugeordneten Kühlsystem, umfassend einen Kühlmittelkreislauf zur Führung des Kühlmittels und eine Kühleinrichtung zur wenigstens indirekten Kühlung des Kühlmittels und eine dem Kühlmiftelkreislauf oder der Kühleinrichtung zugeordnete Einrichtung zur Bereitstellung gekühlter Umgebungsluft zur Aufnahme der Wärme aus dem Kühlmittelkreislauf beziehungsweise der Kühleinrichtung In Form eines Lüfters, der mit der Antriebsmaschine drehfest verbindbar Ist, vorgeschlagen, bei welchem die durch den Lüfter zur Wärmeaufnahme bereitstellbare Luftmenge als Parameter zur Bereitstellung der erforderlichen Kühlleistung im Kühlsystem in Abhängigkeit der aktuellen Betriebsparameter an der Antriebsmaschine und den Fahrzuständen sowie wenigstens einer, die Temperatur des Kühlmediums im Kühlkreislauf wenigstens mittelbar charakterisierender Größe eingestellt wird. Der Lüfter ist dabei frei von einer direkten drehfesten Kopplung beziehungsweise einer Koppelung mit festen, das heißt unveränderlichem Übersetzungsverhältnis in allen Betriebszuständen von der Antriebsmaschine. Die Anpassung der erforderlichen Lüfterleistung erfolgt dabei vor oder gleichzeitig mit der eigentlichen Kühlleistungsänderung.

Aus den aktuellen Betriebsparametern der Antriebsmaschine, einer, die Temperatur im Kühlkreislauf wenigstens indirekt charakterisierenden Größe und den Fahrzuständen wird das theoretisch sich einstellende Änderungsverhalten, insbesondere die sich daraus ergebende Änderung der Kühlleistung des Kühlkreislaufes, ermittelt. Aus dieser theoretischen Änderung wird dann die erforderliche Lüfterleistung zur Beibehaltung einer bestimmten Kühlleistung beziehungsweise eines Kühlleistungsbereiches abgeleitet.

Das erfindungsgemäße Verfahren ermöglicht es, den Energiebedarf des Lüfters optimal an die Gegebenheiten, d.h. die vom Kühlmittelkreislauf geforderte Kühlmittelleistung bei voraussichtlicher Änderung der Gegebenheiten anzupassen. Es besteht keine feste Beziehung der vom Lüfter bereitgestellten Luftmenge und damit Lüfterleistung und dem Betriebszustand, insbesondere der Drehzahl der Antriebsmaschine und damit auch keine Rückwirkung zwischen beiden mehr. Ferner wird ein "Leerlauf' des Lüfters, der durch die übermäßige Bereitstellung von Wärme aufnehmenden Luftmengen charakterisiert ist, die jedoch zur Bereitstellung der erforderlichen Kühlleistung gar nicht benötigt werden, vermieden.

Die Einstellung der vom Lüfter abzugebenden zur Bereitstellung der erforderlichen Kühlleistung benötigten Luftmenge erfolgt dabei durch Beeinflussung der Drehzahl des Lüfters, da diese im Wesentlichen proportional zur bereitgestellten Luftmenge ist, da die durch Rotation des Lüfters bedingten Widerstände nahezu vernachlässigbar sind und damit beim Antrieb im Wesentlichen ein gleiches Moment erzeugt wird. Da die Kühlleistung im Kühlsystem, insbesondere im Kühlmittelkreislauf abhängig von der vom Lüfter bereitgestellten Luftmenge zur Wärmeaufnahme direkt aus dem Kühlmittelkreislauf oder aber von der Kühleinrichtung ist, ist die Kühlleistung des Kühlsystems somit auch eine Funktion der Drehzahl des Lüfters. Die weiteren Parameter werden in diesem Fall durch die durch die Kühleinrichtung bereitstellbare Kühlleistung bestimmt. Bei Ausbildung der Kühleinrichtung als Wärmetauscher ist diese beispielsweise abhängig von der Art und der Ausbildung die in der Kühleinrichtung die Wärme aufnehmenden Medien beziehungsweise Bauelemente.

Als Betriebsparameter fungieren dabei wenigstens die Temperatur der Antriebsmaschine und / oder die Drehzahl der Antriebsmaschine und / oder wenigstens eine, diese indirekt charakterisierende Größe. Wenigstens indirekt gerecht charakterisierend bedeutet in diesem Zusammenhang, dass zwischen den entsprechenden Größen Temperatur beziehungsweise Drehzahl und der diese indirekt charakterisierende Größe ein funktionaler Zusammenhang besteht. Dieser kann unterschiedlich ausgelegt sein. Als Betriebs- beziehungsweise Fahrzustand charakterisierende Größe wird dabei wenigstens eine der nachfolgend genannten Größen oder eine Kombination aus diesen angesehen:
- eine, den aktuellen Betriebszustand der Antriebsmaschine wenigstens mittelbar charakterisierende Größe
- die Aktivierung oder die Aktivierung von den Fahrzustand beeinflussenden Aggregaten
- die Position beziehungsweise Betätigung einer Fahrerwunsch-Vorwahleinrichtung zur Einstellung und / oder Änderung eines Fahrzustandes beziehungsweise die Änderung der diese charakterisierenden Größen
- bei Nutzung des Kühlsystems der Antriebsmaschine zur Kühlung weiterer Aggregate des Antriebsstranges die Aktivität dieser Aggregate und ferner die Intensität beziehungsweise die für diese Aggregate benötigte Kühlleistung.

Erfindungsgemäß erfolgt die Einstellung der erforderlichen Kühlleistung durch Drehzahlsteuerung oder Regelung des Lüfters über eine Triebverbindung zwischen Lüfter und Antriebsmaschine, wobei in diesem Mittel zur Steuerung des Übertragungsverhaltens angeordnet sind. Diese Mittel werden dabei von einer steuer- beziehungsweise regelbaren hydrodynamischen Kupplung gebildet. Diese ermöglicht es - je nach Ausführungsart- durch entsprechende Einstellung der Leistungsaufnahme beziehungsweise durch die Größe des übertragbaren Momentes die Drehzahl des Lüfters zu beeinflussen.

Erfindungsgemäß kann die Drehzahl des Lüfters als Parameter zur Bestimmung der zum Zwecke der Kühlung bereitgestellten Luftmenge gesteuert sowie auch geregelt werden, Die Einstellung in Form der Steuerung oder Regelung kann dabei als Verfahren in die Steuerung und / oder Regelung beispielsweise der Kühlleistung des Kühlsystems oder der Temperatur der Antriebsmaschine oder ähnlichem integriert werden. Das Verfahren ist dabei Bestandteil der Steuer- und / oder Regelstrecke der übergeordneten Steuer- oder Regelung.

Als Betriebsmittel der Kupplung fungiert je nach Ausbildung des Betriebsmittelversorgungssystems Öl, Wasser oder ein Kühlmittel.

Die erfindungsgemäß gestaltete Antriebsanlage eignet sich in optimaler Weise zur Realisierung eines erfindungsgemäßen Verfahrens gemäß Anspruch aufgrund der freien Einstellbarkeit des über die Kupplung übertragbaren Momentes.

Die erfindungsgemäße Lösung wird nachfolgend anhand von Figuren erläutert. Darin ist im Einzelnen folgendes dargestellt:
- Figur 1: verdeutlicht in schematisch stark vereinfachter Darstellung den Grundaufbau eines Grundprinzips einer erfindungsgemäß gestalteten Antriebsanlage zur Realisierung des Verfahrens zur Optimierung der Kühileistungsbereitstellung;
- Figur 2: verdeutlicht in schematisch vereinfachter Darstellung eine besonders vorteilhafte Ausgestaltung einer erfindungsgemäß gestalteten Antriebsanlage mit Ausbildung der steuer- beziehungsweise regelbaren Kupplung als hydrodynamische Kupplung unter Ausnutzung des Kühlsystems für die Antriebsmaschine als Betriebsmittelversorgungssystem, jedoch ohne die erfindungsgemässe Aufbringung eines statischen Überlagerungsdruckes auf den Betriebsmittelspiegel in einem Betriebsmittelbehälter;
- Figuren 3a und 3b: verdeutlichen in schematisch vereinfachter Darstellung für die Ausführung gemäß Figur 2 die anhand eines Blockschaltbildes die Steuerung und der Regelung der Lüfterdrehzahl;
- Figur 4: verdeutlicht anhand eines Blockschaltbildes gemäß Figur 3b die Möglichkeit der Regelung der Temperatur der Antriebsmaschine;
- Figuren 5a und 5b: verdeutlichen in schematisch stark vereinfachter Darstellung zwei weitere Möglichkeiten der Steuerung der vom Lüfter abgebbaren Leistung über eine Kupplung mit separatem Betriebsmitteiversorgungssystem;
- Figur 6: verdeutlicht eine Weiterentwicklung gemäß Figur 2 mit einer zusätzlichen Kühlmittelwäizpumpe.

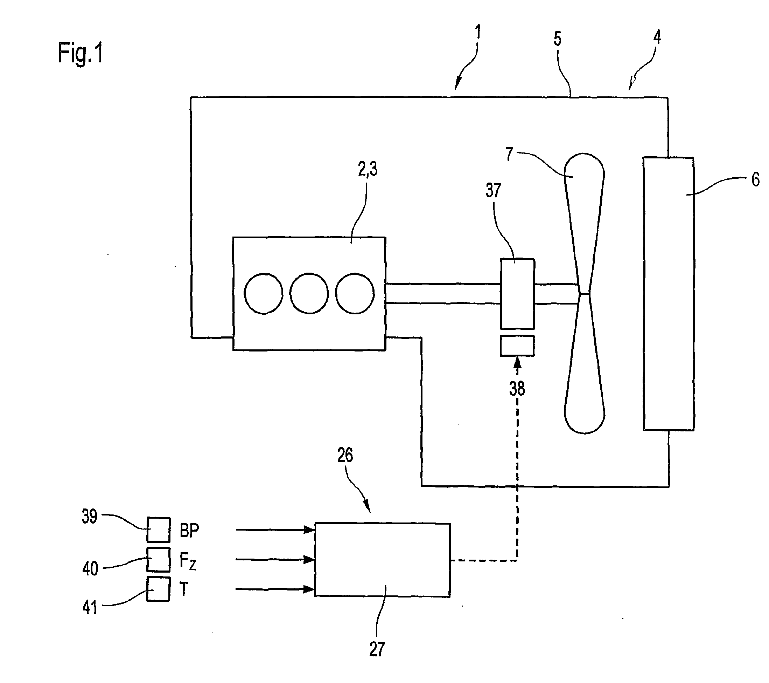

Figur 1 verdeutlicht in schematisch stark vereinfachter Darstellung anhand eines Ausschnittes aus elnerAntriebsanlage 1 den Grundaufbau dieser erfindungsgemäß gestalteten Ausführung. Die Antriebsanlage A1 umfasst eine Antriebsmaschine 2, die beliebig ausgeführt sein kann, vorzugsweise als Verbrennungskraftmaschine 3. Der Antriebsmaschine 2 ist ein Kühlsystem 4 zugeordnet. Diese umfasst einen Kühirnittelkreislauf 5 zum Leiten beziehungsweise zum Führen von Kühlmedien, mindestens jedoch einem Kühlmedium, sowie eine dem Kühlmittelkreislauf 5 zugeordnete Kühleinrichtung 6. Ferner ist ein Lüfter 7 vorgesehen, welcher die Kühleinrichtung 6 mit kühler Umgebungsluft versorgt, die die vom Kühlmedium im Bereich der Kühleinrichtung 6 an diese abgegebene Wärme aufnimmt. Die Kühleinrichtung 6 ist dabei im Kühlmittelkreislauf 5 angeordnet. Bezüglich der Ausführung besteht eine Vielzahl von Möglichkeiten. Diese kann beispielsweise als Wärmetauscher ausgebildet werden. Der Lüfter 7 steht mit der Antriebsmaschine 2 in Triebverbindung. Die Einstellung, vorzugsweise Steuerung und/oder Regelung der Kühlleistung des Kühlsystem 4 und damit wenigstens indirekt der Temperatur des Kühlmediums im Kühlmittelkreislauf 5 erfolgt über die Steuerung und/oder Regelung der über den Lüfter 7 bereitstellbaren Menge an kühler Umgebungsluft zur Aufnahme der vom Kühlmedium nach Kühlung des Aggregates abgebbaren Wärme. Dies erfolgt über die Steuerung und/oder Regelung der Drehzahl n_{Lüfter} des Lüfters 7 bzw. eine, diese wenigstens indirekt charakterisierende Größe. Erfindungsgemäß wird zur Steuerung und/oder Regelung der Drehzahl n_{Lüfter} des Lüfters 7 in der Triebverbindung mit der Antriebsmaschine 2 eine steuer- oder regelbare Kupplung 37 in Form einer hydrodynamischen Kupplung 8 vorgesehen. Diese dient der Steuerung der über diese übertragbare Leistung. Durch Steuerung des übertragbaren Momentes über die steuer- und/oder regelbare Kupplung bei gleichbleibender bereitgestellter Leistung durch die Antriebsmaschine wird die Drehzahl n_{A} am Ausgang der steuer- und/oder regelbaren Kupplung 37 entsprechend eingestellt. Diese entspricht oder ist zumindest der Drehzahl n_{Lüfter} des Lüfters 7 direkt proportional. Zur Realisierung der einzelnen Steuer- und/oder Regelaufgaben ist eine entsprechende Steuer- und/oder Regelvorrichtung 26 vorgesehen. Diese umfasst mindestens eine Steuer- und/oder Regeleinrichtung 27, unter welcher die Gesamtheit der die Funktion eines Steuergerätes übernehmenden Komponenten bei dezentraler Anordnung oder aber das Steuergerät zu verstehen ist. Die Steuer- und/oder Regeleinrichtung 27 ist mit einer Stelleinrichtung 38 zur Einstellung bzw. Änderung des Übertragungsverhaltens der Kupplung 37 gekoppelt. Die Einstellung bzw. Änderung des Übertragungsverhaltens der Kupplung 37 erfolgt dabei in Abhängigkeit der nachfolgend genannten Größen:
- Temperatur/en des/der zu kühlenden Aggregate/s, insbesondere der Verbrennungskraftmaschine 3
- wenigstens einen Betriebsparameter der Antriebsmaschine oder eine, diesen wenigstens indirekt charakterisierende Größe
- wenigstens eine den Funktionszustand der Antriebsanlage wenigstens mittelbar charakterisierende Größe, beim Einsatz der Antriebsanlage in mobilen Anwendungen wenigstens eine den Fahrzustand wenigstens mittelbar beschreibenden Größe

Unter Betriebsparameter der Antriebsmaschine werden dabei die die Funktionsweise dieser wenigstens mittelbar charakterisierenden Größen, d.h. entweder direkt beschreibende oder über andere Größen über einen funktionalen Zusammenhang ableitbare Größen verstanden. Zu diesen gehören unter anderem beispielsweise die Drehzahl nₘₒₜ der Antriebsmaschine 2, die abgebbare Leistung Pₘₒₜ, das abgebare Moment Mₘₒₜ e.t.c. Diese können beispielsweise bei der Ausbildung als Verbrennungskraftmaschine durch die Drosselklappenstellung bzw. die Einspritzmenge bestimmt werden.

Unter den die Fahrzustände wenigstens mittelbar charakterisierenden Größen werden dabei die auf die Energiebilanz der Antriebsanlage wirkenden Parameter verstanden. Dazu zählen sowohl die aktuell zu einem Zeitpunkt t vorliegenden Parameter aber auch die, welche auf eine Änderung hinzielen, wobei mindestens erstere zu berücksichtigen sind. Zu diesen gehören beispielsweise die Betriebsweise einer Bremseinrichtung charakterisierenden Größen, die Leistungsabgabe der Antriebsmaschine zum Zeitpunkt t, eine aktuell eingelegte Gangstufe etc.. Zu den auf eine Änderung des Fahrzustandes hinzielenden Größen gehören beispielsweise die Betätigung einer Bremseinrichtung, insbesondere die Vorgabe eines Fahrerwunsches zur Erzeugung eines Bremsmomentes bestimmter Größe, die Vorgabe eines Fahrerwunsches nach Beibehaltung einer konstanten Geschwindigkeit, die Vorgabe eines Fahrerwunsches nach Änderung der Leistungsabgabe durch die Antriebsmaschine etc., wobei diese allein oder in Kombination vorliegen können. Zur Erfassung der einzelnen Größen sind entsprechende Erfassungseinrichtungen vorgesehen, Die Erfassungseinrichtung für wenigstens eine, einen Betriebsparameter BP der Antriebsmaschine 2 wenigstens mittelbar beschreibende Größe ist mit 39, die zur Erfassung wenigstens einer den Fahrzustand FZ wenigstens mittelbar beschreibenden Größe mit 40 und die zur Erfassung der die Temperatur der Antriebsmaschine 2 wenigstens mittelbar charakterisierenden Größe ist mit 41 bezeichnet, Die einzelnen Erfassungseinrichtungen 39 bis 41 sind mit der Steuereinrichtung 27 gekoppelt, entweder seriell oder parallel. Entsprechend des aus diesen Größen ableitbaren zu erwartenden Kühlleistungsbedarf wird in Abhängigkeit der aktuellen Betriebsparameter der Antriebsmaschine 2 die Leistung des Lüfters 7 durch Einstellung, insbesondere Steuerung der Drehzahl n_{Lüfter}, über die steuer- und/oder regelbare Kupplung 37, insbesondere durch Ansteuerung der dieser zugeordneten Stelleinrichtung 38 eingestellt.

Die Einstellung der Drehzahl n_{Lüfter} erfolgt dabei beispielsweise durch
- Steuerung und/oder Regelung des Füllungsgrades FG und/oder des Durchflusses oder
- Steuerung und/oder Regelung eines Weges oder beispielsweise Druckes zur Betätigung eines Stellgliedes oder in Form eines auf einen vorhandenen Betriebsmittelsumpf aufbringbaren statischen Überiagerungsdruckes.

Entscheidens ist erfindungsgemäß, dass bereits im Vorfeld ein sich einstellender Kühlleistungsbedarf ermittelt wird, ehe dieser sich tatsächlich einstellen kann. Das System reagiert somit im Vorfeld.

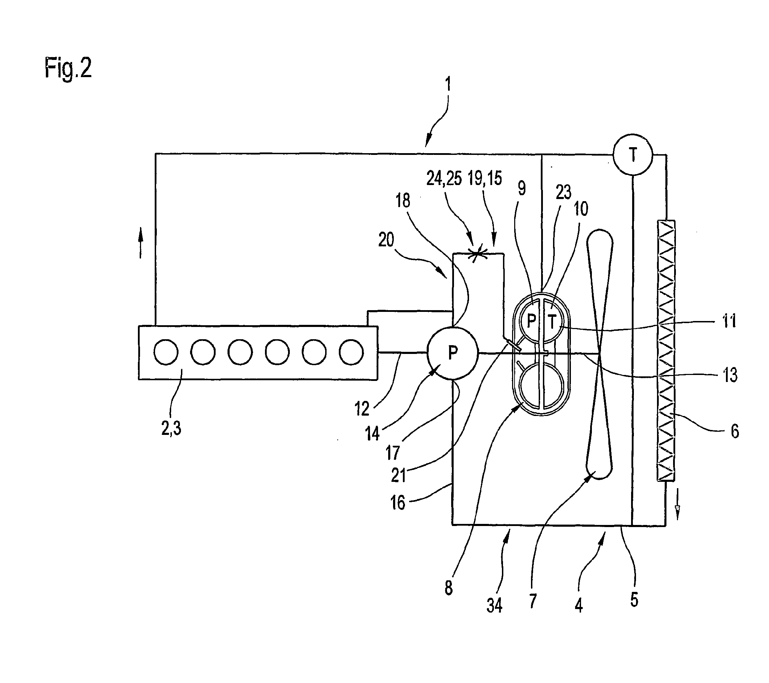

Die Figur 2 verdeutlicht in schematisch stark vereinfachter Darstellung anhand eines Ausschnittes aus einer Antriebsanlage 1 gemäß Figur 1 den Grundaufbau einer besonders vorteilhaften Ausgestaltung zur Umsetzung des erfindungsgemäßen Verfahrens, jedoch ohne die erfindungsgemässe Aufbringung eines statischen Überlagerungsdruckes auf den Betriebsmittelspiegel in einem Betriebsmittelbehälter. Für gleiche Elemente werden daher die gleichen Bezugszeichen verwendet. Die Antriebsanlage 1 umfasst eine Antriebsmaschine 2, welche vorzugsweise in Form einer Verbrennungskraftmaschine 3 ausgeführt ist. Der Antriebsmaschine 2, insbesondere der Verbrennungskraftmaschine 3, ist das Kühlsystem 4 zugeordnet. Dieses umfasst einen Kühlmittelkreislauf 5 zum Leiten bzw. Führen von Kühlmedien sowie eine, dem Kühlmittelkreislauf 5 zugeordnete Kühleinrichtung 6. Ferner ist ein Lüfter 7 vorgesehen, welcher die Kühleinrichtung 6 mit kühler Umgebungsluft versorgt, die Wärme aufnimmt. Der Lüfter 7 ist wenigstens mittelbar drehfest mit der Antriebsmaschine 2, insbesondere der Verbrennungskraftmaschine 3, verbunden. Dies bedeutet, dass der Lüfter 7 mit der Antriebsmaschine 2 bzw. der Verbrennungskraftmaschine 3 in Triebverbindung steht, d.h. entweder drehfest oder über zwischengeschaltete Übertragungselemente mit dieser verbunden ist. Erfindungsgemäß wird zur Steuerung und/oder Regelung der Leistung des Lüfters 7, welche insbesondere als Funktion der Drehzahl charakterisiert ist, bzw. vorzugsweise direkt der Drehzahl n_{Lüfter} des Lüfters 7 in der Triebverbindung mit der Antriebsmaschine 2 bzw. der Verbrennungskraftmaschine 3 als regelbare Kupplung 37 eine hydrodynamische Kupplung 8 angeordnet. Diese hydrodynamische Kupplung 8 ist dabei in Leistungsübertragungsrichtung betrachtet der Antriebsmaschine 2 bzw. der Verbrennungskraftmaschine 3 nachgeschaltet und dem Lüfter 7 vorgeschaltet. Die Einstellung, d.h. zumindest Steuerung der Drehzahl n_{Lüfter} des Lüfters 7 erfolgt über die Änderung des Füllungsgrades FG der hydrodynamischen Kupplung 8. Bei der hydrodynamischen Kupplung 8 handelt es sich somit um eine durchflussgesteuerte, gemäß einer besonders vorteilhaften Ausführung durchflussgeregelte, hydrodynamische Kupplung. Die hydrodynamische Kupplung 8 umfasst ein als Pumpenrad fungierendes Primärrad 9 und ein als Turbinenrad fungierendes Sekundärrad 10, die miteinander einen Arbeitsraum 11 bilden, der mit Betriebsmittel befüllbar ist. Das Primärrad 9 ist dabei wenigstens mittelbar, d.h. direkt oder über weitere Übertragungsmittel mit der Kurbelwelle 12 der Verbrennungskraftmaschine 3 verbunden. Das Sekundärrad 10 ist wenigstens mittelbar, d.h. direkt oder über weitere Übertragungsmittel mit dem Lüfter 7, insbesondere der Lüfterantriebswelle 13, verbunden. Bezüglich der Versorgung der hydrodynamischen Kupplung 8 mit Betriebsmittel bestehen eine Mehrzahl von Möglichkeiten. Gemäß einer besonders vorteilhaften Ausgestaltung entsprechend Figur 2 wird die hydrodynamische Kupplung 8 mit Betriebsmittel aus dem Kühlsystem 4 der Antriebsmaschine 2 versorgt. Das Kühlsystem 4 bzw. Teile von diesem bilden oder sind Bestandteil eines der hydrodynamischen Kupplung 8 zugeordneten Betriebsmittelversorgungssystems 34. Zur Umwälzung des Kühlmittels im Kühlmittelkreislauf 5 ist dabei eine Kühlmittelumwälzpumpe 14 vorgesehen. Diese dient der Aufrechterhaltung des Strömungskreislaufes im Kühlmittelkreislauf 5 und ist vorzugsweise mit der Antriebsmaschine 2 gekoppelt. Im dargestellten Fall erfolgt die Anordnung zwischen Antriebsmaschine 2 und hydrodynamischer Kupplung 8. Die Drehzahl der Antriebswelle ist somit immer an die Drehzahl der Antriebsmaschine 2, insbesondere der Kurbelwelle 2 gebunden. Bei Versorgung der hydrodynamischen Kupplung 8 mit Kühlmittel aus dem Kühlmittelkreislauf 5 als Betriebsmittel ist die hydrodynamische Kupplung 8 in einem Bypass 15 zum Kühlmittelkreislauf 5 angeordnet. Der Kühlmittelkreislauf 5 bildet dabei einen ersten Kühlmittel führenden Teil 16 zwischen einem Ablauf 18 und einem Zulauf 17 zur Kühlmittelumwälzpumpe 14. Der zweite Kühlmittel führende Teil 19, ist als Bypass 15 ausgeführt und dient der Betriebsmittelversorgung der hydrodynamischen Kupplung 8. Der Bypass 15 umfasst mindestens eine erste Bypassteilleitung 20 und eine zweite Bypassteilleitung 22. Die erste Bypassteilleitung 20 verbindet den Ablauf 18 der Kühlmittelumwälzpumpe 14 mit dem Einlass 21 der hydrodynamischen Kupplung 8, wobei dieser direkt oder indirekt über weitere Leitungen oder Kanäle mit dem Arbeitsraum 11 der hydrodynamischen Kupplung 8 verbunden ist. Die zweite Bypassteilleitung 22 verbindet mindestens einen Ablauf 23 der hydrodynamischen Kupplung 8 mit der Zulaufleitung 17 zur Kühlmittelumwälzpumpe 14. Dabei erfolgt die Kopplung mit dem Ablauf 23 bzw. einer Vielzahl von derartigen Abläufen mit dem Arbeitsraum 11 beispielsweise über Auslassöffnungen. Zur Einstellung des Füllungsgrades FG ist dabei zwischen der Kühlmittelumwälzpumpe 14 und dem Einlass 21 der hydrodynamischen Kupplung 8 eine Ventileinrichtung 24, deren Durchflussmenge zumindest gesteuert werden kann, angeordnet. Die Ventileinrichtung 24 ist dabei als verstellbare Ventileinrichtung, vorzugsweise in Form eines Proportionalventils 25, ausgebildet. Die Versorgung des Arbeitsraumes 11 der hydrodynamischen Kupplung 8 mit Betriebsmittel in Form von Kühlmittel aus dem Kühtmittelkreislauf 5 der Antriebsmaschine 2, die Ankopplung der Kupplung 8 an den Kühlmittelkreislauf 5 zwischen dem Ablauf 18 und dem Zulauf 17 der Kühlmittelumwälzpumpe 14 über den Bypass 15 und das Vorsehen einer steuerbaren Ventileinrichtung 24 in Strömungsrichtung zwischen Kühlmittelumwälzpumpe 14 und hydrodynamischer Kupplung 8 ermöglicht es, auf einfache Art und Weise durch Ansteuerung der Ventileinrichtung 24 den Durchfluss durch die hydrodynamische Kupplung 8 zu steuern bzw. bei Rückführung eines entsprechenden Signals auch zu regeln und damit aufgrund der Füllungsgradänderung die Drehzahl des Sekundärrades 10 beziehungsweise des mit dem Sekundärrad 10 der hydrodynamischen Kupplung 8 gekoppelten Lüfters 7 einzustellen und gemäß einer besonders vorteilhaften Ausführung zu regeln. Dieses System zeichnet sich dabei durch einen geringen zusätzlichen konstruktiven sowie steuerungstechnischen Aufwand aus und ist hinsichtlich der zusätzlich benötigten Bauelemente optimiert. Ferner wird bei dieser Lösung für das Betriebsmittelversorgungssystem 34 für die hydrodynamische Kupplung 8 auf das bereits ohnehin vorhandene Kühlsystem 4, insbesondere den Kühlmittelkreislauf 5, zurückgegriffen. Der Kühlmittelkreislauf 5 selbst kann dabei als offener oder geschlossener Kreislauf ausgeführt sein. Diesbezüglich bestehen keine Restriktionen. Bei der in der Figur 2 dargestellten vorteilhaften Ausgestaltung ist der Kühlmittelkreislauf 5 als geschlossener Kreislauf ausgeführt.

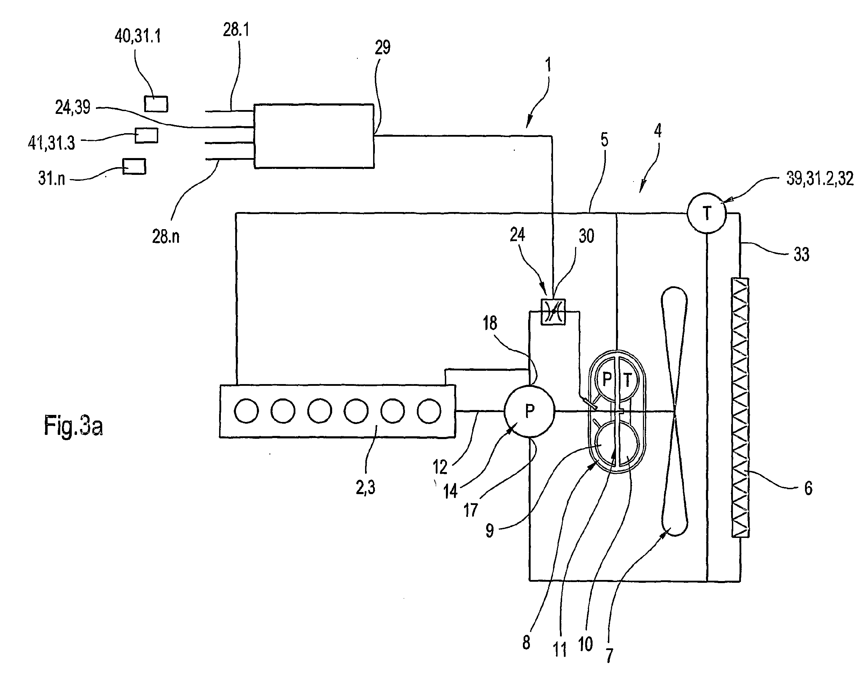

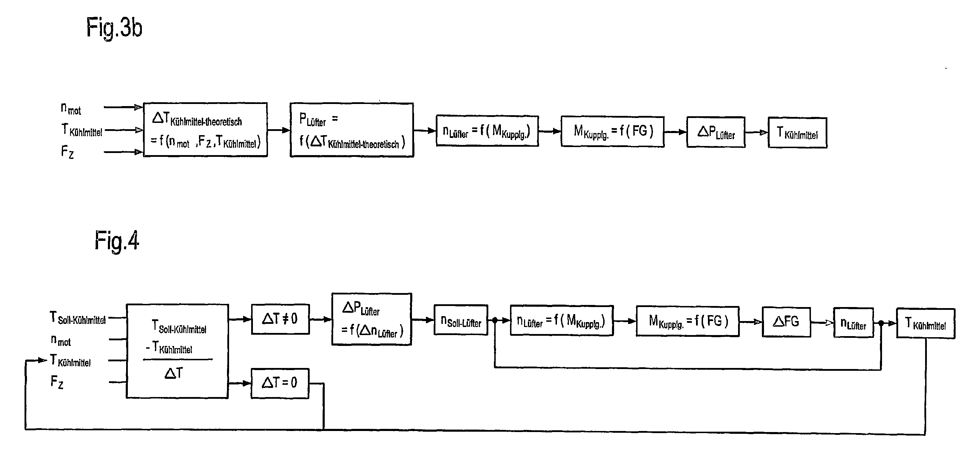

Mit der erfindungsgemäßen Lösung besteht die Möglichkeit, die Kühlleistung des Lüfters 7, welche im wesentlichen durch dessen Drehzahl n_{Lüfter} bestimmt ist und damit durch diese beeinflussbar ist, unabhängig von der Drehzahl nₘₒₜ der Antriebsmaschine 2 einzustellen. Erfindungsgemäß erfolgt dabei die Einstellung der Drehzahl n_{Lüfter} des Lüfters 7 in Abhängigkeit der Betriebsparameter der Antriebsanlage 1, so dass die Temperatur im Kühlsystem 4 gehalten wird, ohne dass die Antriebsmaschine, insbesondere Verbrennungskraftmaschine 3 zurück - oder hochgeregelt werden muss, indem die durch den Lüfter 7 abgegebene Kühlleistung bereits vor dem Ansteigen oder Abfallen der Temperatur des Kühlmediums im Kühlmittelkreislauf 5, bedingt durch die Änderung der Betriebsparameter angepasst werden kann. Dies bietet den Vorteil, dass zum einen die Temperatur der Verbrennungskraftmaschine 3 im Wesentlichen konstant bleibt und ferner der Energiebedarf für die Kühlung optimiert wird. Als Betriebsparameter der Antriebsanlage 1 werden dabei die Temperaturen der mittels dem Kühlmittelkreislauf 5 zu kühlenden Komponenten beziehungsweise Aggregate, insbesondere der Antriebsmaschine 2, und eventuell bei Vorsehen eines hier im einzelnen nicht dargestellten Retarders dessen Temperatur sowie die die Betriebszustände der Antriebsmaschine 2 und des Fahrzeuges wenigstens mittelbar charakterisierenden Größen verstanden. Zu diesen Größen gehören unter anderem die mögliche Betätigung eines Retarders, die die Leistungsabgabe der Antriebsmaschine charakterisierenden Kennwerte, beispielsweise Drehzahl nₘₒₜ, Moment Mₘₒₜ, bei Kopplung der Antriebsmaschine 2 mit einer Getriebeeinheit die eingelegte Gangstufe sowie die am Abtrieb, insbesondere Getriebeausgang vorliegenden Kenngrößen, beispielsweise n_{Abtrieb}, M_{Abtrieb}. Die Möglichkeit der Steuerung der Drehzahl n_{Lüfter} des Lüfters 7 ist in der Figur 3a wiedergegeben. Der Grundaufbau der Antriebsanlage 1 entspricht dem in der Figur 2 beschriebenen, weshalb für gleiche Elemente die gleichen Bezugszeichen verwendet werden. Dieser ist dabei eine Steuervorrichtung 26 zugeordnet, umfassend eine Steuereinrichtung 27, welche vorzugsweise als Steuergerät, insbesondere eine ECU, ausgeführt ist. Diese umfasst mindestens einen Eingang 28, im dargestellten Fall eine Mehrzahl von Eingängen 28.1 bis 28.n, und wenigstens einen Ausgang 29, welcher mit der Stelleinrichtung 30 der Ventileinrichtung 24 verbunden ist. Der Eingang 28 bei serieller Datenübertragung bzw. die Eingänge 28.1 bis 28.n bei paralleler Datenübertragung sind dabei jeweils mit Einrichtungen 31.1 bis 31.n zur Erfassung von Betriebsparametern der Antriebsanlage 1, insbesondere 39 zur Erfassung einer die Temperatur des zu kühlenden Aggregates wenigstens mittelbar beschreibenden Größe, 40 zur Erfassung wenigstens einer, den Betriebszustand der Antriebsmaschine 2 wenigstens mittelbar beschreibenden Größe und 41 zur Erfassung wenigstens einer den Fahrzustand wenigstens mittelbar charakterisierenden Größe verbunden. Im dargestellten Fall handelt es sich dabei beispielsweise bei der Einrichtung 31.1 um die Einrichtung 40 zur Erfassung einer, die Drehzahl der Antriebsmaschine 2 nₘₒₜ wenigstens indirekt charakterisierenden Größe, bei der Einrichtung 31.2 um die Einrichtung 39 zur Erfassung einer, die Temperatur der Antriebsmaschine wenigstens mittelbar charakterisierenden Größe in Form der Temperatur im Kühlmittelkreislauf 5 und bei der Einrichtung 31.3 um wenigstens eine Einrichtung 41 zur Erfassung einer, den Fahrzustand wenigstens mittelbar charakterisierenden Größe. Die Einrichtung 31.2 ist dabei vorzugsweise als Thermostat 32 ausgeführt, welches im Kühlkreislauf angeordnet ist und vorzugsweise im Zulauf 33 zur Kühleinrichtung 6 angeordnet ist. In Abhängigkeit der aktuell ermittelten Drehzahl der Antriebsmaschine nₘₒₜ sowie des aktuellen Fahrzustandes und der aktuell im Kühlmittelkreislauf 5 ermittelten Temperatur T kann dabei auf eine Änderung der erforderlichen Kühlleistung durch den Kühlmittelkreislauf 5 geschlossen werden, insbesondere eine eventuell aufgrund der aktuellen Gegebenheiten sich ergebende Erhöhung oder Verringerung der Temperatur im Kühlmittelkreislauf 5. In Abhängigkeit dieser ermittelbaren, d.h. vorzugsweise berechenbaren Änderung der Kühlmitteltemperatur ΔT erfolgt dann die Ansteuerung der hydrodynamischen Kupplung 8, insbesondere die Vorgabe des zum Erreichen der erforderlichen durch den Lüfter 7 bereitstellbaren Leistung zur Bereitstellung der Kühlleistung im Kühlmittelkreislauf 5 einzustellenden Füllungsgrades FG durch Ansteuerung der Ventileinrichtung 24, insbesondere deren Stelleinrichtung 30. die Ventileinrichtung 24 fungiert dabei als Stelleinrichtung 38 zur Einstellung des Füllungsgrades FG im Arbeitsraum 11. Bei gewünschter Beibehaltung der Temperatur der Antriebsmaschine 2 ist es erforderlich, die sich aus den Betriebsparametern ergebenden Änderungen ΔT_{Kühlmittel-theoretisch} der Temperatur T_{Kühlmittet} im Kühlmittelkreislauf 5 abzuleiten. Aus dieser sich einstellenden Änderung wird die Stellgröße zur Ansteuerung des Lüfters 7 gebildet, um das Kühlniveau im Kühlkreislauf 5 konstant zu halten. Dazu wird ein Sollwert zur Abgabe der erforderlichen Kühlleistung P_{Lüfter} ermittelt, welcher proportional zur Drehzahl n_{soll-Lüfter} ist. Zur Steuerung der Kühlmitteltemperatur im Kühlmittelkreislauf T_{Kühlmittel} wird dabei die Drehzahl n_{Lüfter} des Lüfters 7 gesteuert. Als Stellgröße für die Steuerung der Drehzahl des Lüfters n_{Lüfter}, die der Drehzahl n_{Kupplung} am Ausgang der hydrodynamischen Kupplung 8, d.h. dem Turbinenrad 10 entspricht oder zu dieser in funktionalem Zusammenhang steht, vorzugsweise dieser direkt proportional ist, dient dabei der Füllungsgrad FG der hydrodynamischen Kupplung 8, der wiederum über die Ventileinrichtung 24 eingestellt wird. Der Füllungsgrad FG beschreibt dabei das über die Kupplung 8 übertragbare Moment M_{Kupplung}, welches in Abhängigkeit der Drehzahl nₘₒₜ der Antriebsmaschine 2 die über die Kupplung 8 übertragbare Leistung P_{Kupplung} bestimmt. Ein entsprechendes Blockschaltbild ist in Figur 3b dargestellt.

Die Figur 4 verdeutlicht anhand eines Blockschaltbildes gemäß Figur 3b die Möglichkeit der Regelung der Temperatur der Antriebsmaschine Tₘₒₜ auf konstante Temperatur durch Regelung der Temperatur im Kühlmittelkreislauf 5 T_{Kühlmittel}. Die Temperatur des Kühlmittels T_{Kühlmittel} bildet dabei die die Temperatur der Antriebsmaschine Tₘₒₜ wenigstens mittelbar charakterisierende Größe. Diese Temperatur wird fortlaufend überwacht und bei Abweichung des Istwertes Tₘₒₜ beziehungsweise T_{Kühlmittel} vom Sollwert T_{Soll-Mot} beziehungsweise T_{soll-Kühlmittel} Δ_{T} erfolgt die Ansteuerung des Lüfters 7 als Stelleinrichtung der Regelung auf konstante Temperatur des Motors beziehungsweise Kühlmittels, insbesondere die Einstellung der erforderlichen Drehzahl n_{Soll-Lüfter}. Dabei wird die Drehzahl des Lüfters n_{Lüfter} vorzugsweise geregelt, indem der Istwert n_{Lüfter} fortlaufend oder in zeitlichen Abständen ermittelt wird und mit dem aus der Temperaturabweichung sich ergebenden einzustellenden Sollwert n_{Soll-Lüfter} verglichen wird. Entsprechend der Regelabweichung wird dann eine Änderung des Füllungsgrades FG der hydrodynamischen Kupplung 8 vorgenommen, bis eine Abweichung von 0 erreicht wird. Die Einstellung des Füllungsgrades FG erfolgt dann über die Ansteuerung der Ventileinrichtung 24, die die Durchflussmenge im Bypass 15 bestimmt. Die Steuerung - beziehungsweise bei Rückführung die Regelung der Drehzahl des Lüfters 7 ist Bestandteil einer Steuer- und / oder Regelung der Temperatur des Kühlmittels beziehungsweise einer diese wenigstens mittelbar charakterisierende Größe. Bei dieser Ausführung ist Regelung der Drehzahl des Lüfters 7 in die Regelung auf konstante Kühlmitteltemperatur integriert, Es ist jedoch auch denkbar die Drehzahlregelung in der Steuerung gemäß Figur 3b zu integrieren. Ferner kann auch zur Regelung der Kühlmitteltemperatur nur eine Steuerung der Lüfterdrehzahl genutzt werden.

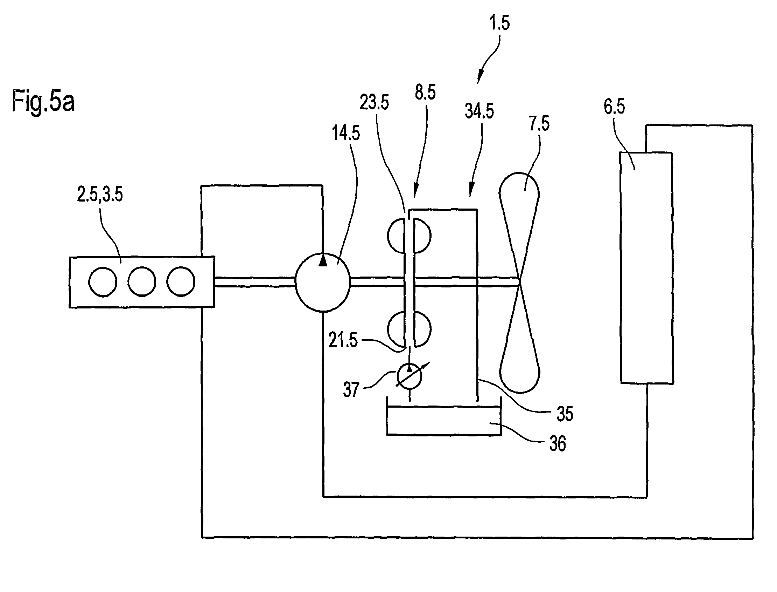

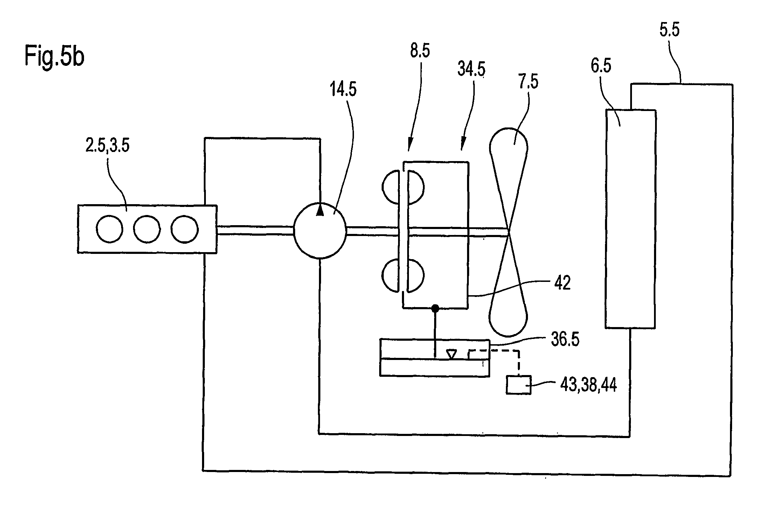

Die Figuren 5a und 5b verdeutlichen In schematisch stark vereinfachter Darstellung zwei weitere Möglichkeiten der Steuerung der vom Lüfter 7.5 abgebbaren Kühlleistung P_{Lüfter} durch Steuer- oder Regelung der Drehzahl des Lüfters 7.5, indem dazu die hydrodynamische Kupplung 8.5 genutzt wird. Dieser ist dabei jedoch ein eigenes Betriebsmitteiversorgungssystem 34.5 unabhängig vom Kühlmittelkreislauf 5.5 zugeordnet. Der Kühlmittelkreislauf 5.5 der Antriebsmaschine 2 entspricht dabei dem in der Figur 2 beschriebenen, jedoch frei von einem Bypass mit in diesem angeordneter hydrodynamischer Kupplung 8.5. Für gleiche Elemente werden dabei die gleichen Bezugszeichen verwendet. Das Betriebsmittelversorgungssystem 34.5 der hydrodynamischen Kupplung 8.5 kann dabei verschiedenartig ausgeführt sein. Im dargestellten Fall in der Figur 5a, welche die erfindungsgemässe Aufbringung eines statischen Überlägerungsdruckes auf den Betriebsmittelspiegel im Betriebsmittelbehälter 36 nicht zeigt, wird dabei ein offener Kreislauf 35 verwendet. Dieser umfasst einen Betrlebsmittelbehälter 36, der über entsprechende Leitungsverbindungen mit wenigstens einem Einlass 21.5 und einem Ablauf 23.5 der hydrodynamischen Kupplung 8.5 verbunden ist. Dieses System zeichnet sich durch eine konstante Auslassöffnung in der hydrodynamischen Kupplung aus. Dabei ändert sich der Füllungsgrad der hydrodynamischen Kupplung 8.5 mit Änderung des zugeführten Fluidstromes. Diese Änderung wird durch eine Kühlpumpe 37 eingestellt, welche dem Betriebsmittelbehälter 36 in Zuflussrichtung zum Arbeitsraum 11 der hydrodynamlschen Kupplung 8 nachgeschaltet ist. Dieses System unterscheidet sich zwar konstruktiv von dem in der Figur 1 beschriebenen, jedoch können mit diesem System die gleichen Steuer- und Regelvorgänge vorgenommen werden. Entscheidend ist, dass zur Steuerung der Leistungsabgabe des Lüfters 7 die Nutzung einer hydrodynamischen Kupplung mit veränderlichem Füllungsgrad erfolgt. Demgegenüber verdeutlicht die Ausführung gemäß Figur 5b eine erfindungsgemäße Ausbildung des Betriebsmittelversorgungssystems 34.5. mit einem geschlossenen Kreislauf 42, der druckdicht an einen Betriebsmittalbehälter 36.5 angeschlossen ist. Dabei sind Mittel 43 zur Erzeugung eines statischen Überlagerungsdruckes auf den Betriebsmitteispiegel im Behälter vorgesehen, welche die Stelleinrichtung 38 der Kupplung 8.5 zur Änderung des Leistungsübertragungsverhaltens, insbesondere des übertragbaren Momentes in Form von Mitteln 44 zur Änderung des Füllungsgrades bilden.

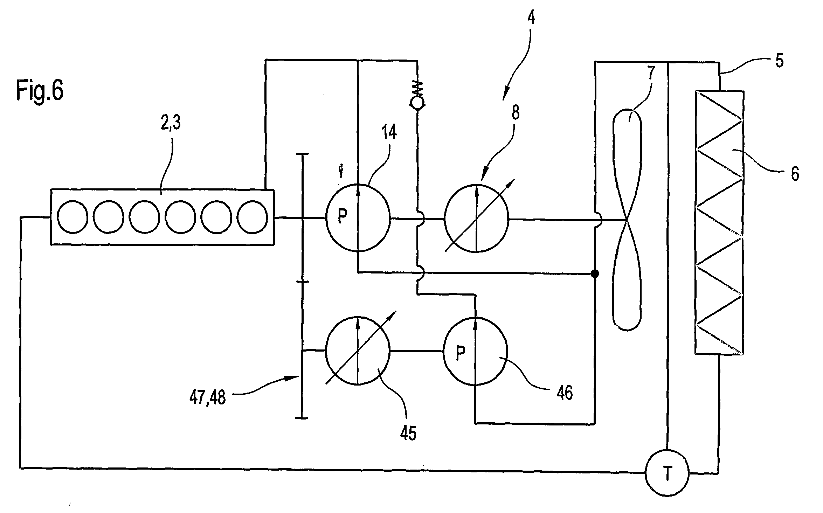

Figur 6 verdeutlicht in schematisch vereinfachter Darstellung eine Weiterentwicklung gemäß Figur 2, bei welcher eine zusätzliche über eine steuerbeziehungsweise regelbare beliebig ausführbare Kupplung 45 antreibbare zweite Kühlmittelumwälzpumpe 46 im Kühlmittelkreislauf angeordnet ist. Diese ist ferner über eine Drehzahl-/Drehmomentwandlungseinheit 47, beispielsweise in Form eines Stirnradsatzes 48 mit der Antriebsmaschine 2 gekoppelt. Diese Lösung bietet den Vorteil einer freien Einstellbarkeit der Fördermenge der Kühlmittelumwälzpumpe 46 unabhängig von der Drehzahl der Antriebsmaschine 2.

### Bezugszeichenliste

- 1, 1.5: Antriebsanlage
- 2,2.5: Antriebsmaschine
- 3, 3.5: Verbrennungskraftmaschine
- 4, 4.5: Kühlsystem
- 5, 5.5: Kühlmittelkreislauf
- 6: Kühleinrichtung
- 7,7.5: Lüfter
- 8, 8.5: hydrodynamische Kupplung
- 9: Primärrad
- 10: Sekundärrad
- 11: Arbeitsraum
- 12: Kurbelwelle
- 13: Lüfterantriebswelle
- 14: Kühlmittelumwälzpumpe
- 15: Bypass
- 16: erster Kühlmittel führender Teil
- 17: Zulauf
- 18: Ablauf
- 19: zweiter Kühlmittel führender Teil
- 20: erste Bypassteilleitung
- 21, 21.5: Einlass
- 22: zweite Bypassteilleitung
- 23, 23.5: Ablauf
- 24: Ventileinrichtung
- 25: Proportionalventil
- 26: Steuervorrichtung
- 27: Steuereinrichtung
- 28.1 bis 28.n: Eingang
- 29: Ausgang
- 30: Stelleinrichtung des Ventils
- 31.1 bis 31.n: Einrichtung zur Erfassung der Betriebsparameter
- 31.1: Einrichtung zur Erfassung einer, die Drehzahl der Antriebsmaschine nₘₒₜ wenigstens indirekt charakterisierenden Größe
- 31.2: Einrichtung zur Erfassung einer, die Temperatur im Kühlmittelkreislauf 5 wenigstens indirekt charakterisierenden Größe
- 31.3: Einrichtung zur Erfassung einer, den Fahrzustand wenigstens indirekt charakterisierenden Größe
- 32: Thermostat
- 33: Zulauf
- 34, 34.5: Betriebsmittelversorgungssystem der hydrodynamischen Kupplung
- 35: offener Kreislauf
- 36: Betriebsmittelbehälter
- 37: steuer- und / oder regelbare Kupplung
- 38: Stelleinrichtung
- 39: Einrichtung zur Erfassung einer einen Betriebsparameter BP der Antriebsmaschine wenigstens mittelbar beschreibenden Größe;
- 40: Einrichtung zur Erfassung wenigstens einer den Fahrzustand FZ wenigstens mittelbar beschreibenden Größe
- 41: Einrichtung zur Erfassung einer die Temperatur der Antriebsmaschine wenigstens mittelbar charakterisierenden Größe
- 42: geschlossener Kreislauf
- 43: Mittel zum Aufbringen eines statischen Überlagerungsdruckes auf den Betriebsmittelspiegel
- 44: Mittel zur Änderung des Füllungsgrades
- 45: verstellbare Kupplung
- 46: zweite Kühlmittelumwälzpumpe
- 47: Drehzahl-/Drehmomentwandlungseinheit
- 48: Stirnradsatz
- 49: Mittel zur Beeinflussung des Übertragungsverhaltens der hydrodynamischen Kopplung
- nₘₒₜ: Drehzahl der Antriebsmaschine
- n_{Lüfter}: Drehzahl des Lüfters
- T_{Kühlmittel}: Temperatur im Kühlmittelkreislauf
- T_{Soll-Kühlmiittel}: Kühlmittel-Sollwert der Kühlmitteltemperatur
- ΔT: Regelabweichung der Kühlmitteltemperatur
- P_{Lüfter}: vom Lüfter abzugebende Kühlleistung
- n_{Soll-Lüfter}: Sollwert der Lüfter-Drehzahl
- n_{ist-Lüfter}: Istwert der Lüfterdrehzahl

## Patentansprüche

1. Antriebsanlage (1; 1.5);
mit einer Antriebsmaschine (2, 3; 2.5, 3.5);
mit einem Kühlsystem (4; 4.5) zum Kühlen der Antriebsmaschine (2, 3; 2.5, 3.5), umfassend einen Kohlmittelkreislauf (5; 5.5), eine Kühleinrichtung (6) und einen der Kühleinrichtung zugeordneten Lüfter (7; 7.5);
der Lüfter (7; 7.5)steht mit der Antriebsmaschine (2, 3; 2.5: 3.5) In Triebverbindung;
zwischen Antriebsmaschine (2, 3; 2.5: 3.5) und Lüfter (7; 7.5) ist eine steuer- oder regelbare Kupplung (37) angeordnet;
die Kupplung (37) ist als hydrodynamische Kupplung (8; 8.5) ausgebildet, umfassend ein Primärrad und ein Sekundärrad, die miteinander einen mit Betriebsmittel befüllbaren Arbeitsraum (11) bilden;
mit Mitteln (49) zur Beeinflussung des Übertragungsverhaltens der hydrodynamischen Kupplung (8; 8.5).
mit einem der Kupplung (8, 8.5) zugeordneten separatem Betriebsmittelversorgungssystem (34; 34.5);
das Betriebsmittelversorgungssystem (34; 34.5) umfasst einen mit dem Arbeitsraum (11) gekoppelten Kreislauf (42);
mit dem Kreislauf (42) zugeordneten Mitteln (44) zur Änderung des Füllungsgrades im Arbeitsraum (11);
der Kreislauf (42) ist als geschlossener Kreislauf (42) ausgeführt, der druckdicht an einen druckdicht geschlossenen Betriebsrnittelbahälter (36.5) gekoppelt ist; **dadurch gekennzeichnet, dass** die Mittel (44) zur Änderung des Füllungsgrades Mittel (43) zum Aufbringen eines statischen Überlagerungsdruckes auf den Betriebsmittelspiegel im Betriebsmittelbehälter (36.5) umfassen.

2. Antriebsanlage (1; 1.5) nach Anspruch 1, **gekennzeichnet durch** folgende Merkmale:
mit einer Steuer und/oder Regelvorrichtung, umfassend wenigstens eine Steuer- und/oder Regeleinrichtung;
mit der Steuer- und/oder Regeleinrichtung gekoppelten Erfassungseinrichtungen zur Erfassung der nachfolgend genannten Größen:
wenigstens einem aktuellen Betriebsparameter der Antriebsmaschine wenigstens einer, den Betriebszustand der Antriebsanlage wenigstens
mittelbar charakterisierenden Größe; wenigstens einer, die Temperatur im Kühlkreislauf wenigstens mittelbar
charakterisierenden Größe;
die Steuer- und/oder Regeleinrichtung ist mit einer Stelleinrichtung der Kupplung zur Beeinflussung des übertragbaren Momentes verbunden.

3. Antriebsanlage nach Anspruch 1 oder 2, **gekennzeichnet durch** die folgenden Merkmale:
das Betriebsmittelversorgungssystem (34; 34.5) der hydrodynamischen Kupplung (8; 8.5) wird vom Kühlsystem (4; 4.5) gebildet;
die Kupplung (8; 8.5) ist einer im Kühlsystem (4; 4.5) angeordneten Umwälzpumpe (14.5) in Strömungsrichtung nachgeschaltet;
die Kupplung (8; 8.5) ist in einem Bypass (15) zum Kühlmittelkreislauf (4; 4.5) angeordnet;
mit einer im Kühlsystem (4; 4.5) angeordneten Ventileinrichtung (24) als Stelleinrichtung der Kupplung (8; 8.5) zur Steuerung des Zuflusses von Betriebsmittel zum Arbeitsraum (11) der hydrodynamischen Kupplung (8; 8.5).

4. Antriebsanlage nach Anspruch 3, **dadurch gekennzeichnet, dass** die Ventileinrichtung (24) im Kühlmittelkreislauf (4; 4.5) angeordnet ist.

5. Antriebsanlage nach Anspruch 4, **dadurch gekennzeichnet, dass** die Ventileinrichtung (24) im Bypass (15) angeordnet ist.

6. Antriebsanlage nach einem der Ansprüche 3 bis 5, **dadurch gekennzeichnet, dass** die Ventileinrichtung (24) als Proportionalventil (25) ausgebildet ist.

7. Antriebsanlage nach einem der Ansprüche 3 bis 6, **gekennzeichnet durch** die folgenden Merkmale:
mit einer zweiten im Kühlkreislauf (4) angeordneten Umwälzpumpe (46);
die zweite Umwälzpumpe (46) ist der ersten Umwälzpumpe (14) vorgeschaltet;
die zweite Umwälzpumpe (46) ist über eine Drehzahl/Drehmomentübertragungseinheit (47) zwischen Antriebsmaschine (2, 3) und Kupplung (8) mit der Antriebsmaschine (2, 3) gekoppelt;
die zweite Umwälzpumpe (46) ist verstellbar.

8. Antriebsanlage nach Anspruch 7, **dadurch gekennzeichnet, dass** die Verstellbarkeit der zweiten Umwälzpumpe (46) über eine in der Triebverbindung zwischen Antriebsmaschine (2, 3) und zweiter Umwälzpumpe (46) angeordnete Steuer- und/oder regelbare Kupplung (45) erfolgt.

9. Antriebsanlage nach Anspruch 8, **dadurch gekennzeichnet, dass** die steuer- und/oder regelbare Kupplung (45) als hydrodynamische Kupplung ausgebildet ist.

10. Verfahren zur Optimierung der Energieversorgung eines Kühlsystems (4, 4.5) zur Kühlung mindestens eines Aggregates einer Antriebsanlage (1, 1.5) mit den Merkmalen gemäß einem der Ansprüche 1 bis 9,
bei welchem die Kühlleistung des Kühlsystems (4, 4.5) durch die vom Lüfter (7; 7.5) zur Wärmeaufnahme bereitstellbare Luftmenge gesteuert und/oder geregelt wird;
bei welchem die Steuerung und/oder Regelung der vom Lüfter (7; 7.5) zur Wärmeaufnahme bereitstellbaren Luftmenge durch Steuerung und/oder Regelung der Drehzahl des Lüfters (7; 7.5) erfolgt;
**gekennzeichnet durch** die folgenden Merkmale:
bei welchem die Steuerung und/oder Regelung der Drehzahl des Lüfters (7; 7.5) in Abhängigkeit der nachfolgend genannten Größen und der daraus ermittelbaren Änderung der Temperatur im Kühlkreislauf (5; 5.5) erfolgt: wenigstens einem aktuellen Betriebsparameter der Antriebsmaschine (2, 3; 2.5, 3.5)
wenigstens einer, den Betriebszustand der Antriebsanlage (1; 1.5) wenigstens mittelbar charakterisierenden Größe;
wenigstens einer, die Temperatur im Kühlkreislauf (5; 5.5) wenigstens mittelbar charakterisierenden Größe;
bei welchem als Stellgröße zur Steuerung und/oder Regelung der Drehzahl des Lüfters (7; 7.5) das über die zwischen die Antriebsmaschine (2, 3; 2.5, 3.5) und Lüfter (7; 7.5) geschaltete hydrodynamische Kupplung (8; 8.5, 37) übertragbare Moment oder eine, dieses wenigstens mittelbar charakterisierende Größe fungiert,

11. Verfahren nach Anspruch 10, **dadurch gekennzeichnet, dass** bei einer mobilen Anwendung der Antriebsanlage (1; 1.5) die den Betriebszustand der Antriebsanlage (1; 1.5) wenigstens mittelbar charakterisierenden Größen von den den Fahrzustand wenigstens mittelbar charakterisierenden Größen bestimmt werden.

12. Verfahren nach Anspruch 11, **dadurch gekennzeichnet, dass** als die den Fahrzustand wenigstens mittelbar charakterisierenden Größen wenigstens eine der nachfolgend genannten Größen fungiert:
- eine, die von der Antriebsmaschine abgebare Leitung wenigstens mittelbar charakterisierende Größe
- eine die Betätigung einer Bremseinrichtung oder einer Vorwahleinrichtung zur Einstellung eines Fahrerwunsches oder eines Fahrpedals wenigstens mittelbar charakterisierende Größe.

13. Verfahren nach einem der Ansprüche 10 bis12, **dadurch gekennzeichnet, dass** die sich ergebende Änderung der Temperatur im Kühlkreislauf berechnet wird.

14. Verfahren nach einem der Ansprüche 11 bis 13, **dadurch gekennzeichnet, dass** die sich ergebende Änderung der Temperatur im Kühlkreislauf in Temperaturbereichen abgeschätzt wird.

15. Verfahren nach einem der Ansprüche 11 bis 14, **dadurch gekennzeichnet, dass** die Steuerung und/oder Regelung der Drehzahl des Lüfters Bestandteil einer Regelung auf konstante Temperatur im Kühlmittelkreislauf ist.

## Claims

1. A propulsion system (1; 1.5);
fitted with an engine (2, 3; 2.5, 3,5);
with a cooling system (4; 4.5) for cooling the engine (2, 3; 2.5, 3.5), comprising a coolant circuit (5; 5.5), a cooling device (6) and a fan (7; 7.5) associated with the cooling device;
the fan (7; 7.5) is connected to and actuated by the engine (2, 3; 2.5; 3.5); controlled or regulated clutch (37) is arranged between the engine (2, 3; 2.5; 3.5) and the fan (7; 7.5);
the clutch (37) is formed as a hydrodynamic clutch (5; 8.5),
comprising a primary wheel and a secondary wheel, which together define a work space (11) that can be filled with a working fluid;
with means (49) for influencing the transmission behaviour of the hydrodynamic clutch (8; 8,5);
with a separate working fluid supply system (34; 34,5) associated with the clutch (8, 8.5);
the working fluid supply system (34; 34.5) includes a circuit (42) coupled to the work space(11);
means (44) associated with the circuit (42) for modifying the filling level in the work space (11);
the circuit (42) is designed as a closed circuit (42), which is coupled pressure-tight to a pressure-tight closed working fluid container (36.5);**characterised in that** the means (44) for modifying the filling level include means (43) for applying a static superimposed pressure to the working fluid surface in the working fluid container (36.5).

2. A propulsion system (1; 1.5) according to claim 1, **characterised by** the following features:
fitted with a control and/or regulating system, comprising at least one control and/or regulating device;
acquisition devices coupled to the control and/or regulating device for acquiring the values mentioned below:
at least one current operating parameter of the engine at least one value at least indirectly characterising the operating mode of the propulsion system;
at least one value at least indirectly characterising the temperature in the cooling circuit;
the control and/or regulating device is connected to an adjustment device of the clutch for influencing the transmittable torque.

3. A propulsion system according to claim 1 or 2, **characterised by** the following features:
the working fluid supply system (34; 34.5) of the hydrodynamic clutch (8; 8.5) is formed by the cooling system (4; 4.5);
the clutch (8; 8.5) is connected downstream of a recirculation pump (14.5) arranged in the cooling system (4; 4.5) in the flow direction;
the clutch (8; 8.5) is arranged in a by-pass (15) leading to the coolant circuit (4; 4.5);
fitted with a valve arrangement (24) arranged in the cooling system (4; 4.5) as an adjustment device of the clutch (8; 8.5) for controlling the inflow of working fluid to the work space (11) of the hydrodynamic clutch (8; 8.5).

4. A propulsion system according to claim 3, **characterised in that** the valve arrangement (24) is arranged in the coolant circuit (4; 4.5).

5. A propulsion system according to claim 4, **characterised in that** the valve arrangement (24) is arranged in the by-pass (15).

6. A propulsion system according to one of the claims 3 to 5, **characterised in that** the valve arrangement (24) is designed as a proportional valve (25).

7. A propulsion system according to one of the claims 3 to 6, **characterised by** the following features:
fitted with a second recirculation pump (46) arranged in the cooling circuit (4); the second recirculation pump (46) is connected upstream of the first recirculation pump (14);
the second recirculation pump (46) is coupled to the engine via a rotation speed/torque transmission unit (47) between engine (2, 3) and clutch (8);
the second recirculation pump (46) is adjustable.

8. A propulsion system according to claim 7, **characterised in that** the second recirculation pump (46) can be adjusted via a controlled and/or regulated clutch (45) arranged in the drive connection between engine (2, 3) and the second recirculation pump (46).

9. A propulsion system according to claim 8, **characterised in that** the controlled and/or regulated clutch (45) is designed as a hydrodynamic clutch.

10. A method for optimising the energy supply of a cooling system (4, 4.5) for cooling at least one unit of a propulsion system (1, 1.5) with the features of the claims 1 to 9, in which the cooling efficiency of the cooling system (4, 4.5) is controlled and/or regulated by the amount of air which can be made available by the fan (7; 7.5) for heat absorption;
in which the amount of air which can be made available by the fan (7; 7,5) for heat absorption is controlled and/or regulated by controlling and/or regulating the rotation speed of the fan (7; 7.5);
**characterised by** the following features:
in which the rotation speed of the fan (7; 7.5) is controlled and/or regulated according to the values mentioned below and to the modification of the temperature in the cooling circuit (5; 5.5) which can be ascertained therefrom; at least one current operating parameter of the engine (2.3; 2.5, 3.5); at least one value at least indirectly characterising the operating mode of the propulsion system (1; 1,5);
at least one value at least indirectly characterising the temperature in the cooling circuit (5; 5.5); in which the torque which can be transmitted via the hydrodynamic clutch (8; 8.5, 37) switched between the engine (2.3; 2.5; 3.5) and the fan (7; 7.5) or a value characterising at least indirectly said torque acts as a variable for controlling and/or regulating the rotation speed of the fan (7; 7.5).

11. A method according to claim 10, **characterised in that** the values characterising at least indirectly the operating mode of the propulsion system (1; 1.5) are established by the values characterising at least indirectly the driving mode in the case of a mobile application of the propulsion system (1; 1.5).

12. A method according to claim 11, **characterised in that** at least one of the values mentioned below acts as the values characterising at least indirectly the driving mode:
one value characterising at least indirectly the power which can be delivered by the engine; one value characterising at least indirectly the actuation of a braking device or of a preselection device for adjusting a driver's wish or an accelerator pedal.

13. A method according to one of the claims 10 to 12, **characterised in that** the resulting modification of the temperature in the cooling circuit is computed.

14. A method according to any of the claims 11 to 13, **characterised in that** the resulting modification of the temperature in the cooling circuit in temperature ranges is assessed.

15. A method according to any of the claims 11 to 14, **characterised in that** the control and/or regulation of the rotation speed of the fan is an integral part of a regulating process for maintaining a constant temperature in the coolant circuit.

## Revendications

1. Système de propulsion (1; 1.5);
disposant d'un moteur (2, 3; 2.5, 3,5);
disposant d'un système réfrigérant (4; 4.5) permettant de refroidir le moteur (2.3; 2.5, 3.5), comprenant un circuit réfrigérant(5; 5.5), un dispositif réfrigérant (6)
et un ventilateur (7; 7.5) associé au dispositif réfrigérant;
le ventilateur (7; 7.5) assure une liaison motrice avec le moteur (2.3; 2.5; 3.5);
un embrayage (37) de commande ou de régulation est disposé entre le moteur (2.3; 2.5; 3.5) et le ventilateur (7; 7.5); l'embrayage (37) est conçu comme un embrayage hydrodynamique (5; 8.5),
comprenant une roue primaire et une roue secondaire, consitutant ensemble un espace de travail (11) pouvant être rempli d'un fluide moteur;
disposant de moyens (49) permettant d'influencer le comportement de transmission de l'embrayage hydrodynamique (8; 8,5);
disposant d'un système d'alimentation en fluide moteur (34; 34,5) séparé associé à l'embrayage (8, 8.5);
le système d'alimentation en fluide moteur (34; 34.5) comprend un circuit (42) accouplé à l'espace de travail (11);
disposant de moyens (44) associés au circuit (42) et permettant de modifier le niveau de remplissage dans l'espace de travail (11);
le circuit (42) est conçu comme circuit fermé (42), qui est accouplé de manière étanche à la pression au niveau d'un conteneur de fluide moteur (36.5) fermé de manière étanche à la pression; **caractérisé en ce que** les moyens (44) permettant de modifier le niveau de remplissage comprennent des moyens (43) permettant d'appliquer une pression géostatique à la surface du fluide moteur dans le conteneur de fluide moteur (36.5).

2. Système de propulsion (1; 1.5) selon la revendication 1, présentant les caractéristiques suivantes:
disposant d'un système de commandé et/ou de régulation, comprenant au moins un dispositif de commande et/ou de régulation;
avec des dispositifs d'acquisition accouplés au dispositif de commande et/ou de régulation permettant d'acquérir les valeurs mentionnées ci-dessous:
au moins un paramètre d'exploitation courant du moteur;
au moins une variable caractérisant au moins indirectement le mode d'exploitation du système de propulsion;
au moins une variable caractérisant au moins indirectement la température dans le circuit réfrigérant;
le dispositif de commande et/ou de régulation est connecté à un dispositif de réglage de l'embrayage permettant d'influencer le couple transmissible.

3. Système de propulsion selon la revendication 1 ou 2, présentant les caractéristiques suivantes:
le système d'alimentation en fluide moteur (34; 34.5) de l'embrayage hydrodynamique (8; 8.5) est constitué du système réfrigérant (4; 4.5);
l'embrayage (8; 8.5) est connecté en aval d'une pompe de recirculation (14:5) disposée dans le système réfrigérant (4; 4.5) dans le sens d'écoulement;
l'embrayage (8; 8.5) est disposé dans une dérivation (15) conduisant au circuit réfrigérant (4; 4.5);
muni d'un dispositif de soupape (24) situé dans le système réfrigérant (4; 4.5) comme dispositif de réglage de l'embrayage (8; 8.5) permettant de commander l'afflux de fluide moteur vers l'espace de travail (11) de l'embrayage hydrodynamique (8; 8.5).

4. Système de propulsion selon la revendication 3 **caractérisé en ce** en ce que le dispositif de soupape (24) est disposé dans le circuit réfrigérant (4; 4.5).

5. Système de propulsion selon la revendication 4, **caractérisé en ce que** le dispositif de soupape (24) est disposé dans la dérivation (15).

6. Système de propulsion selon l'une des revendications 3 à 5, **caractérisé en ce** en ce que le dispositif de soupape (24) est conçu comme soupape proportionnelle (25).

7. Système de propulsion selon l'une des revendications 3 à 6, présentant les caractéristiques suivantes:
présence d'une seconde pompe de recirculation (46) disposée dans le circuit réfrigérant (4); la seconde pompe de recirculation (46) est connectée en amont de la première pompe de recirculation (14);
la seconde pompe de recirculation (46) est accouplée au moteur (2, 3) par le biais d'une unité de transmission de vitesse de rotation / de couple (47) entre le moteur (2, 3) et l'embrayage (8); la seconde pompe de recirculation (46) est réglable.

8. Système de propulsion selon la revendication 7, **caractérisé en ce** en ce que le réglage de la seconde pompe de recirculation (46) fait appel à un embrayage pouvant être commandé et/ou régulé (45) disposé dans la liaison motrice entre le moteur (2, 3) la seconde pompe de recirculation (46).

9. Système de propulsion selon la revendication 8, **caractérisé en ce** en ce que l'embrayage pouvant être commandé et/ou régulé (45) est conçu comme embrayage hydrodynamique.

10. Procédé d'optimisation d'alimentation en énergie d'un système réfrigérant (4, 4.5) permettant de refroidir au moins une unité de système de propulsion (1, 1.5) présentant les caractéristiques des revendications 1 à 9, dans lequel l'efficacité de refroidissement du système réfrigérant (4, 4.5) est commandée et/ou régulée par la quantité d'air pouvant être fournie par le
ventilateur (7; 7.5) pour permettre l'absorption de chaleur;
dans lequel la commande et/ou la régulation de la quantité d'air pouvant être fournie par le ventilateur (7; 7,5) pour permettre l'absorption de chaleur fait appel à la commande et/ou la régulation de la vitesse de rotation du ventilateur (7; 7.5);
présentant les caractéristiques suivantes:
dans lequel la commande et/ou la régulation de la vitesse de rotation du ventilateur (7; 7.5) se déroule en fonction des valeurs mentionnées ci-dessous et du changement de température dans le circuit réfrigérant (5; 5.5) déterminé à partir desdites valeurs;
au moins un paramètre d'exploitation courant du moteur (2. 3; 2.5, 3.5);
au moins une variable caractérisant au moins indirectement le mode d'exploitation du système de propulsion (1; 1,5);
au moins une variable caractérisant au moins indirectement la température dans le circuit réfrigérant (5; 5.5);
dans lequel le couple transmissible par le biais de l'embrayage hydrodynamique (8; 8.5, 37) connecté entre le moteur (2.3; 2.5; 3.5) et le ventilateur (7; 7.5) ou bien une valeur caractérisant au moins indirectement ledit couple, fait office de variable de réglage permettant de commander et/ou de réguler la vitesse de rotation du ventilateur (7; 7.5).

11. Procédé selon la revendication 10, **caractérisé en ce que** dans le cas d'une application mobile du système de propulsion (1; 1.5) les valeurs caractérisant au moins indirectement le mode d'exploitation du système de propulsion (1; 1.5) sont définies par les valeurs caractérisant au moins indirectement l'état de conduite.

12. Procédé selon la revendication 11, **caractérisé en ce qu'**au moins une des valeurs mentionnées ci-dessous fait office de valeurs caractérisant au moins indirectement l'état de conduite:
une valeur caractérisant au moins indirectement la puissance pouvant être délivrée par le moteur;
une valeur caractérisant au moins indirectement l'actionnement d'un dispositif de freinage ou d'un dispositif de présélection permettant de traduire un souhait du conducteur ou de régler une pédale d'accélérateur.

13. Procédé selon l'une des revendications 10 à 12, **caractérisé en ce** en ce que l'on calcule le changement de température résultant dans le circuit réfrigérant.

14. Procédé selon l'une des revendications 11 à 13, **caractérisé en ce** en ce que l'on évalue le changement de température résultant dans le circuit réfrigérant dans les plages de température.

15. Procédé selon l'une des revendications 11 à 14, **caractérisé en ce** en ce que la commande.et/ou la régulation de la vitesse de rotation du ventilateur est partie intégrante d'un système de régulation dans le circuit réfrigérant pour maintenir une température constante.
